# EUROPEAN PATENT APPLICATION

(11) **EP 2 737 965 A1**
(43) Date of publication of application: **04.06.2014**
(21) Application number: 12008074.2
(22) Date of filing: 01.12.2012
(51) Int. Cl.: B22F 3/105

(54) **Method for manufacturing a metallic component by additive laser manufacturing**

(71) Applicant: Alstom Technology Ltd, 5400 Baden (CH)
(72) Inventor: Etter, Thomas, 5037 Muhen (CH); Konter, Maxim, 5313 Klingnau (CH); Höbel, Matthias, 5210 Windisch (CH); Schurb, Julius, 8004 Zürich (CH)

(57) **Abstract**

The invention refers to a method for manufacturing a three-dimensional metallic article/component (11) entirely or partly, comprising the steps of
a) successively building up said article /component (11) from a metallic base material (12) by means of an additive manufacturing process by scanning with an energy beam (14), thereby
b) establishing a controlled grain orientation in primary and in secondary direction of the article /component (11),
c) wherein the secondary grain orientation is realized by applying a specific scanning pattern of the energy beam (14), which is aligned to the cross section profile of said article /component (14), or with characteristic load conditions of the article/component (11).

## Description

### BACKGROUND OF THE INVENTION

The present invention relates to the technology of high-temperature resistant components, especially hot gas path components for gas turbines. It refers to a method for manufacturing a metallic component / three-dimensional article by additive manufacturing technologies, such as selective laser melting (SLM), selective laser sintering (SLS) or electron beam melting (EBM).

### PRIOR ART

Additive manufacturing has become a more and more attractive solution for the manufacturing of metallic functional prototypes and components. It is known that SLM, SLS and EBM methods use powder material as base material. The component or article is generated directly from a powder bed. Other additive manufacturing methods, such laser metal forming (LMF), laser engineered net shape (LENS) or direct metal deposition (DMD) locally fuse material onto an existing part. This newly generated material may be deposited either as wire or as powder, where the powder deposition device is moved along predefined path with either a robot or a CNC machine.

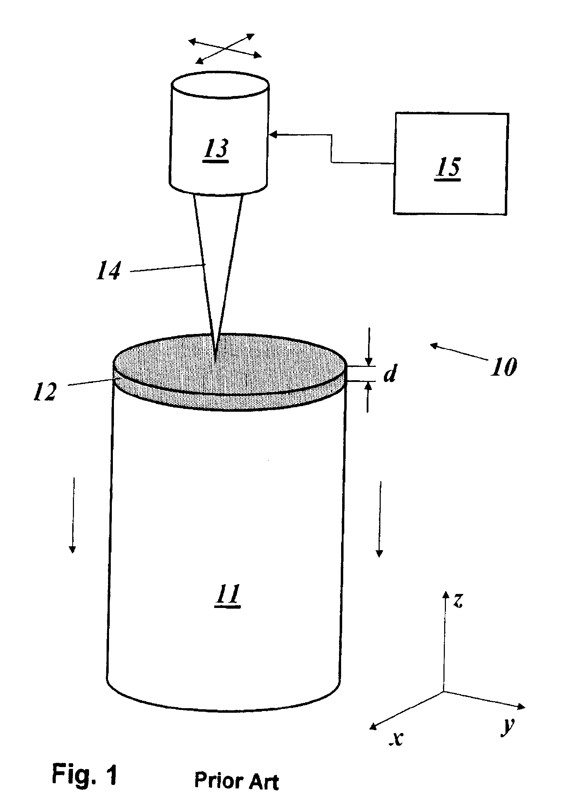

Fig. 1 shows a basic SLM arrangement 10, known from the prior art, wherein a three-dimensional article (component) 11 is manufactured by successive addition of powder layers 12 of a predetermined layer thickness d, area and contour, which are then melted by means of a scanned laser beam 14 from a laser device 13 and controlled by a control unit 15.

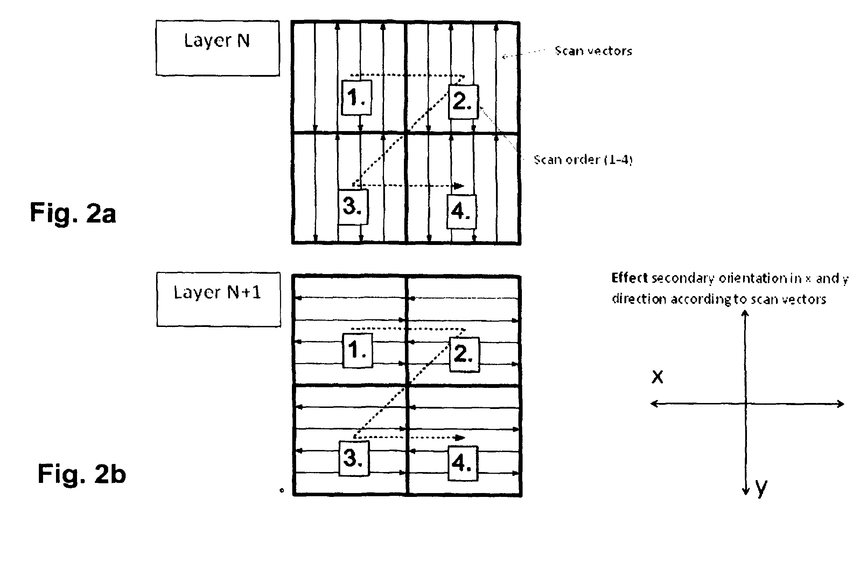

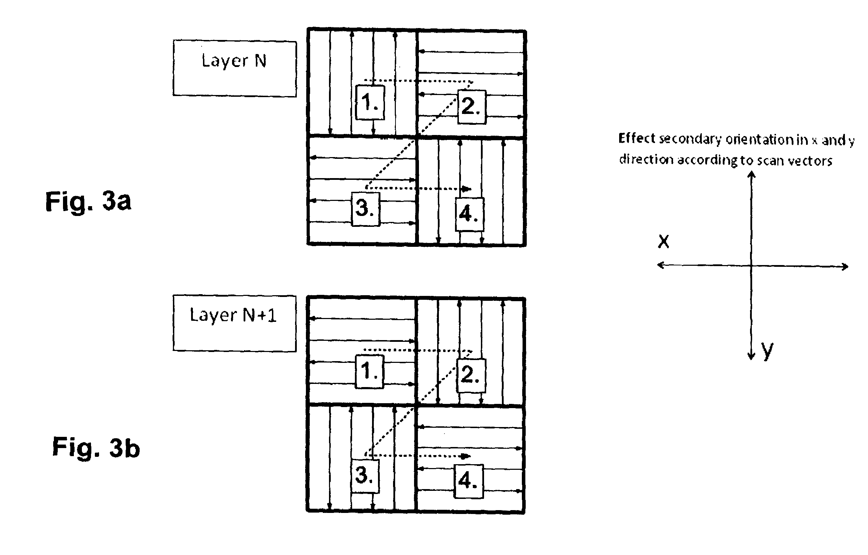

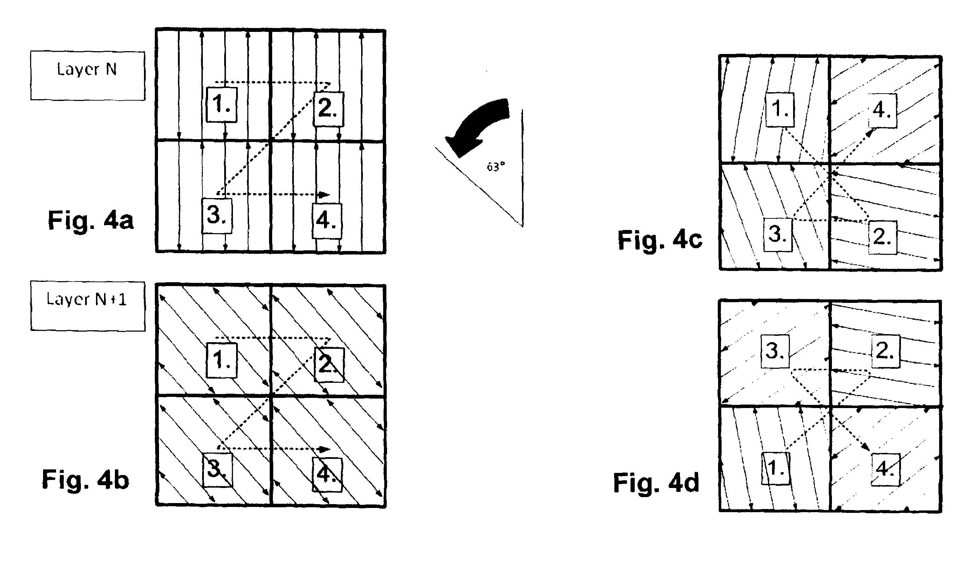

Usually, the scan vectors of one layer are parallel to each other within that layer (see Fig. 2a) or defined areas (so called chest board patterns) have a fixed angle between the scan vectors in one layer (see Fig. 3a). Between subsequent layers (that means between layer n and layer n+1; and between layer n+1 and layer n+2 and so on) the scan vectors are either rotated by an angle of for example 90° (see Fig. 2b, 3b) or by an angle different of 90° or n*90°. (see Fig. 4a, 4b). This (using alternating scanner paths for subsequent layers or for certain areas of a pattern, e.g. chest board, within one layer of the article) was done so far to achieve a good quality (optimum part/article density and geometrical accuracy) with respect to an article made by SLM.

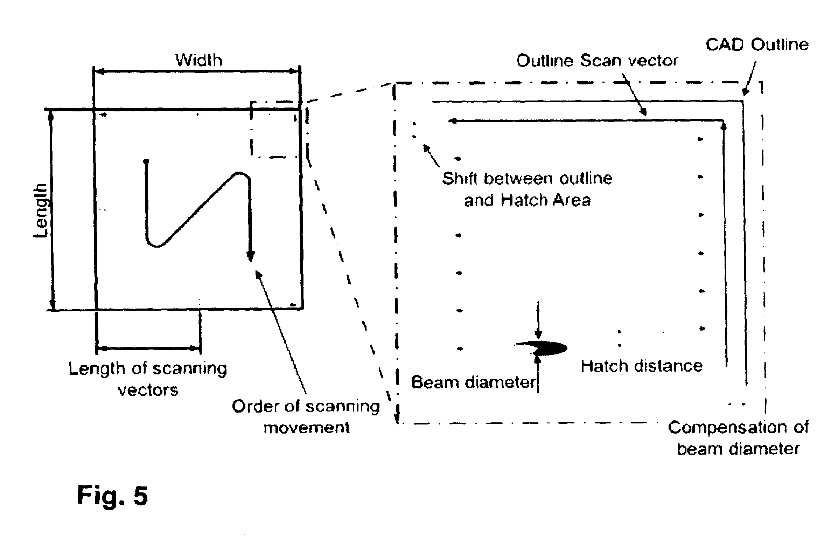

A typical SLM track alignment known from the state of the art is shown in Fig. 5.

Due to the typical temperature profile in the melt pool and the resulting thermal gradients in the vicinity of the melt pool, a faster and preferred grain growth perpendicular to the powder plane (x-y plane) is favoured. This results in a characteristic microstructure showing elongated grains in the z-direction (= primary grain orientation direction, crystallographic [001] direction). This direction is perpendicular to the x-y plane. Therefore, a first specimen extending in z-direction (see Fig. 1) shows properties different from a second specimen extending in the x-y plane (= secondary grain orientation direction, secondary crystallographic direction), for example the Young's modulus along the z-direction is generally different than the Young's modulus in the powder plane (x-y plane).

Therefore, one characteristic feature of powder-based or other additive manufacturing technology is the strong anisotropy of material properties (for example Young's modulus, yield strength, tensile strength, low cycle fatigue behaviour, creep) resulting from the known layer-wise build-up process and the local solidification conditions during the SLM powder bed processing.

Such anisotropy of material properties could be a disadvantage in several applications. Therefore, the applicant has already filed two so far unpublished patent applications, which disclose that the anisotropic material behaviour of components manufactured by additive laser manufacturing techniques can be reduced by an appropriate "post-built" heat treatment, resulting in more isotropic material properties.

During the last 3 decades directionally solidified (DS) and single-crystal (SX) turbine components were developed, which are produced by investment casting and where low values of for example the Young's modulus in primary and secondary grain orientation (normal to the primary growth direction) are aligned with thermo-mechanical load conditions. Such an alignment is here provided by application of seed crystals and grain selectors and has resulted in a significant increase of the components performance and lifetime.

However, so far such techniques to control the primary as well as the secondary crystallographic orientation are not known for parts/components produced by SLM.

It has also become possible to control the microstructure of deposits formed on single-crystal (SX) substrates with generative laser processes, a technique called epitaxial laser metal forming (E-LMF). These methods can produce parts, which have either a preferred grain orientation (DS) or an absence of grain boundaries (SX).

With increasing design complexity of future hot gas path components, the economic manufacturing of such SX or DS parts/components by casting will become more and more problematic, as the casting yield for thin- or double walled components is expected to drop. Moreover, epitaxial laser metal forming can be only applied to parts, where the base material has already a single crystal orientation.

The SLM technique is able to manufacture high performance and complex shaped parts due to its capability to generate very sophisticated designs directly from a powder bed. A similar control of the microstructure as described above for cast SX or DS components would be thus highly beneficial for parts and prototypes which are manufactured with the SLM technique or other additive manufacturing laser techniques. An additional control and alignment of the Young's modulus would further increase the performance and application potential of such components.

### SUMMARY OF THE INVENTION

It is an object of the present invention to disclose a method for entirely or partly manufacturing a metallic component / a three-dimensional article by additive manufacturing methods with improved properties, where the anisotropic properties can either be used in a favourable manner, or where anisotropy can be reduced or avoided, depending on the design intent for the component. It is also an object of the present invention to disclose an appropriate method for realizing an alignment of the anisotropic properties of the article with the local thermo-mechanical load conditions.

This and other objects are obtained by a method according to claim 1.

The present invention discloses a control of secondary crystallographic orientation of grains for metallic components / three-dimensional articles (for example coupons, inserts for components) made of Ni-, Co-, or Fe based superalloys processed by additive manufacturing technology. For this, an appropriate placement of the scanner paths during the article generation is essential.

It is beneficial to control the microstructure of the generated material and to make use of this characteristic material anisotropy.

The invention is based on the finding that the secondary crystal orientation can be controlled by the scanning and build-up control.

The component/article manufactured according to the present invention has a controlled secondary crystallographic grain orientation, which leads to a higher lifetime and operation performance of metallic parts and prototypes in comparison with components manufactured according to the state of the art additive manufacturing methods.

The method according to the invention for manufacturing entirely or partly a three-dimensional metallic article / component comprises the steps of
a) successively building up said article / component from a metallic base material by means of an additive manufacturing process by scanning with an energy beam, thereby
b) establishing a controlled grain orientation in primary and in secondary direction of the article / component,
c) wherein the secondary grain orientation is realized by applying a specific scanning pattern of the energy beam which is aligned to the cross section profile of said article / component or with the local load conditions of the article/component.

In a preferred embodiment of the method the active control of the secondary grain orientation is achieved by placing the scanner paths alternately parallel (in the first layer) and orthogonal (in the next layer) and so on to the direction of the component, where a smallest value of the Young's modulus is desired.

The method can be used especially for manufacturing small to medium size hot gas parts and prototypes with complex design. Such parts can be found, for example in the first turbine stages of a gas turbine, in a compressor or in combustors. It is an advantage that the method can be used both for new part manufacturing as well as within a reconditioning/repair process.

According to an embodiment of the invention said additive manufacturing process is one of selective laser melting (SLM), selective laser sintering (SLS) or electron beam melting (EBM), and a metallic base material of powder form is used.

Specifically, said SLM or SLS or EBM method comprises the steps of:
a) generating a three-dimensional model of said article followed by a slicing process to calculate the cross sections;
b) passing said calculated cross sections to a machine control unit (15) afterwards;
c) providing a powder of said base material, which is needed for the process;
d) preparing a powder layer (12) with a regular and uniform thickness on a substrate plate or on a previously processed powder layer;
e) performing melting by scanning with an energy beam (14) corresponding to a cross section of said articles according to the three-dimensional model stored in the control unit (15);
f) lowering the upper surface of the previously formed cross section by one layer thickness (d);
g) repeating said steps from d) to f) until reaching the last cross section according to the three-dimensional model; and
h) optionally heat treating said three-dimensional article (11), wherein in steps e) the energy beam is scanned in such a way that
   - scan vectors are either perpendicular between subsequent layers or between each certain areas (islands) of a layer thereby establishing a specific desired secondary crystallographic grain orientation or
   - scan vectors have random angles between subsequent layers or between each certain areas (islands) of a layer thereby not establishing a specific secondary crystallographic grain orientation.

The energy beam, for example high density energy laser beam, is scanned with such a specific scanning pattern that the secondary crystallographic grain orientation matches with the design intent of the component.

More specifically, the grain size distribution of said powder is adjusted to the layer thickness of said powder layer in order to establish a good flowability, which is required for preparing powder layers with regular and uniform thickness. According to a further embodiment of the invention the powder grains have a spherical shape.

According to just another embodiment of the invention an exact grain size distribution of the powder is obtained by sieving and/or winnowing (air separation).

According to another embodiment of the invention said powder is provided by means of a powder metallurgical process, specifically one of gas or water atomization, plasma-rotating-electrode process or mechanical milling.

According to another embodiment of the invention said metallic base material is a high-temperature Ni-based alloy.

According to another embodiment of the invention said metallic base material is a high-temperature Co-based alloy.

According to just another embodiment of the invention said metallic base material is a high-temperature Fe-based alloy.

Specifically, said alloy can contain finely dispersed oxides, specifically one of Y₂O₃, AlO₃, ThO₂, HfO₂, ZrO₂.

An important aspect of the present invention is the fact that the preferred microstructures do not have to be implemented in the whole volume of the part. Instead, the alignment can be turned on and off in an arbitrary manner for different zones, depending on the local mechanical integrity (MI) requirements. This is an advantage compared to investment casting or E(epitaxial)-LMF, where the control of the microstructure is lost, once epitaxial growth conditions are no longer present and equiaxed grain growth has occurred.

### BRIEF DESCRIPTION OF THE DRAWINGS

The present invention is now to be explained more closely by means of different embodiments and with reference to the attached drawings.
- Fig. 1: shows a basic arrangement for SLM manufacturing according to the state of the art, which may be used in the present invention;
- Fig. 2a, 2b: show a first scanning strategy (with alternating scan vectors with 90° angle between adjacent layers) for SLM manufacturing;
- Fig. 3a, 3b: show a second scanning strategy (chest board strategy) for SLM manufacturing;
- Fig. 4a to 4c: show two additional scanning strategies (with alternating scan vectors with 63° angle between adjacent layers or with random angles) for SLM manufacturing;
- Fig. 5: shows a typical SLM track alignment known from the state of the art;
- Fig. 6: shows values of Young's modulus at Room Temperature and at 750°C as testing temperature for two different scanning strategies for specimen made of Hastelloy® X measured in the "as built" condition and
- Fig. 7: shows optical micrographs of a Ni-base superalloy in etched condition and orientation maps derived from electron back-scattered diffraction (EBSD) scans.

### DETAILED DESCRIPTION OF DIFFERENT EMBODIMENTS OF THE INVENTION

As described above in the prior art, one characteristic feature of powder-based additive manufacturing technology is the strong anisotropy of material properties resulting from the layer-wise build-up process.

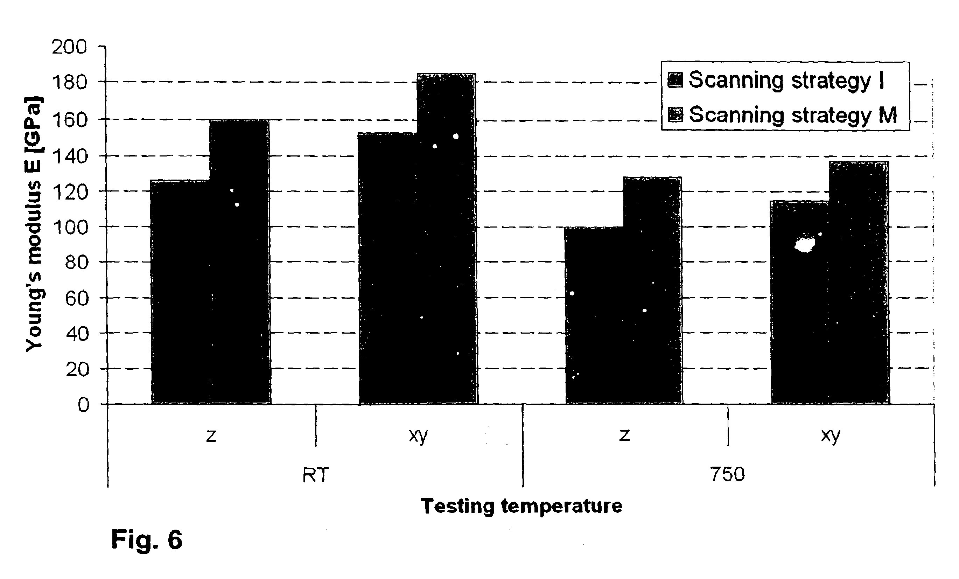

It has turned out that the mechanical properties along the z-direction are different to ones in the x-y plane, which is the powder plane. The Young's modulus along the z-direction (built direction) is generally lower than the Young's modulus in the x-y plane. This is shown in Fig. 6 for specimens made of Hastalloy® X by additive manufacturing with two different scanning strategies, that means two different scanning patterns, and which were tested at room temperature RT and at a temperature of 750°C. The Young's modulus was measured in the "as built" condition. Due to powder-based article production and the inherent high cooling rates of the energy beam-material interaction in these processes, the material is very homogeneous with respect to chemical composition and principally free of segregations. In addition, the material in the "as built" condition has a very fine microstructure (e.g. precipitates and grain size), much finer compared to conventionally cast or wrought superalloys. With scanning strategy I always a significantly lower Young's modulus was achieved in comparison to the different scanning strategy M. This is true for both of the primary (z-direction) and the secondary orientation (x-y plane) and also for two different testing temperatures (Room Temperature RT and 750°C).

The observation about columnar grain growth in the [001] direction is well known. However, a similar directional dependency also exists in the x-y plane. It was found, that with certain process set-ups it is possible to control [001] growth within the secondary plane (scanner movement plane).

The method according to the invention for manufacturing a three-dimensional metallic article / component comprises the steps of
a) successively building up said article /component from a metallic base material by means of an additive manufacturing process by scanning with an energy beam, thereby
b) establishing a controlled grain orientation in primary and in secondary direction of the article /component,
c) wherein the secondary grain orientation is realized by applying a specific scanning pattern of the energy beam which is aligned to the cross section profile of said article /component or with the local load conditions of the article/component.

It is essentially for the present invention that the secondary grain orientation is aligned with the characteristic load conditions of the component, e.g. follows the component cross-section profile.

In one embodiment of the disclosed method the active control of the secondary grain orientation is achieved by placing the scanner paths alternately parallel (in the first layer) and orthogonal (in the next layer) and so on in the following layers to the direction of the component, where a smallest value of the Young's modulus is desired.

Said additive manufacturing technology is especially selective laser melting (SLM), selective laser sintering (SLS), and electron beam melting (EBM). Said powder-based additive manufacturing technology may be used to build up an article, such as a blade or vane of a gas turbine, entirely or partly, e.g. blade crown build up. The article could also be an insert or a coupon used for example for repair processes of a whole component.

When selective laser melting SLM, selective laser sintering SLS or electron beam melting EBM is used as the additive manufacturing technology the method according to the invention comprises the following steps:
a) generating a three-dimensional model of said article followed by a slicing process to calculate the cross sections;
b) passing said calculated cross sections to a machine control unit (15) afterwards;
c) providing a powder of said base material, for example of Ni based superalloy, which is needed for the process;
d) preparing a powder layer (12) with a regular and uniform thickness on a substrate plate or on a previously processed powder layer;
e) performing melting by scanning with an energy beam (14) corresponding to a cross section of said articles according to the three-dimensional model stored in the control unit (15);
f) lowering the upper surface of the previously formed cross section by one layer thickness (d);
g) repeating said steps from d) to f) until reaching the last cross section according to the three-dimensional model; and
h) optionally heat treating said three-dimensional article (11), wherein in step e) the energy beam is scanned in such a way that
   - scan vectors are either perpendicular between each subsequent layer or between each certain areas (islands) of a layer thereby establishing a specific desired secondary crystallographic grain orientation or
   - scan vectors have random angles between each subsequent layer or between each certain areas (islands) of a layer thereby not establishing a specific secondary crystallographic grain orientation.

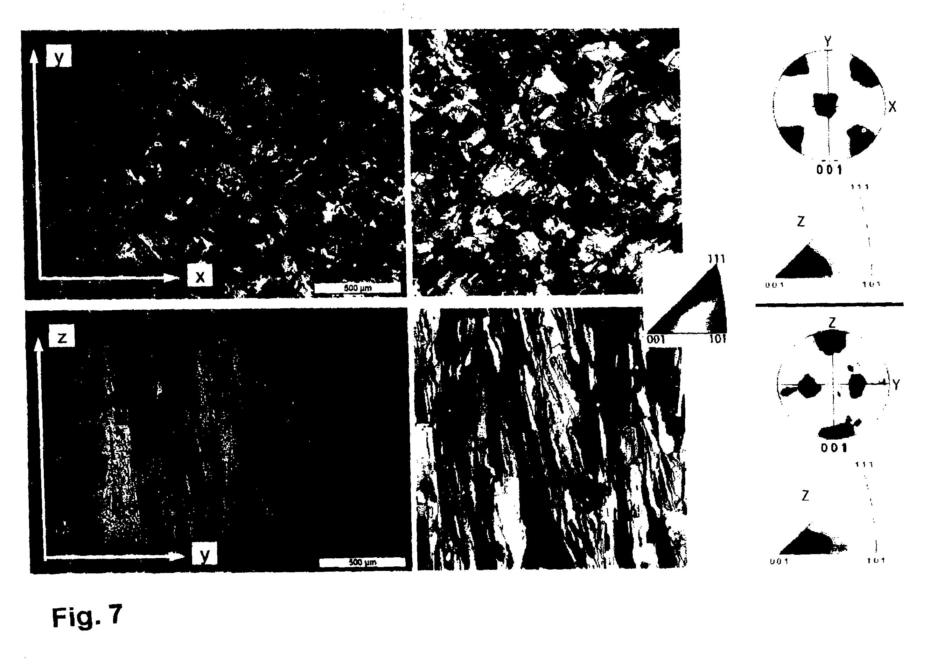

Fig. 7 shows optical micrographs of a Ni-base superalloy in etched condition and orientation maps derived from electron back-scattered diffraction (EBSD) scans. In addition, the preferred crystal orientation obtained by EBSD, represented as pole figures (001) and as inverse pole figures is shown with respect to the building direction z. All orientation maps are coloured by using the standard inverse pole figure (IPF) colour key with respect to the building direction z. It can be seen that the grains do not only show a preferred orientation along z-axis, but also within the x-y plane. Furthermore, the secondary crystallographic grain orientation corresponds to the applied laser movement (e.g. 45° within x-y plane).

With this tailored SLM build-up method, components, for example a gas turbine blade, can be produced, which have optimised mechanical properties in the most heavily loaded areas. For this purpose, the directions with smallest values of the Young's modulus are aligned with the load conditions of the blade.

It is essential that not only a primary, but also the secondary crystallographic orientation of the grains is favourably matched with the design intent of the component, resulting in extended service lifetime.

The active control of the secondary grain orientation is achieved by placing the scanner paths parallel and orthogonal to the direction of the component, where a smallest value of the Young's modulus is desired. The angular change of the scanner path direction in the different layers must always be 90° or a multiple of this value (see Fig. 2a, 2b).

The invention relates to the finding that the secondary crystallographic orientation is being established by using scan vectors which are perpendicular between each layer or between each certain area (islands) of a layer.

It is also possible to get rid of the preferred secondary orientation (achieve a non-pronounced secondary orientation) by using scan vectors, which are parallel within each island of each layer and rotated by for example an angle of 63° in each subsequent layer (see Fig. 4a, 4b) or use random angles (see Fig. 4c, 4d) to vary the scan direction within each island and each layer. An optimal scan pattern for non-pronounced secondary orientation is 63°/xx°.

An important aspect of the present invention is the fact that the preferred microstructures do not have to be implemented in the whole volume of the component. Instead, the alignment can be turned on and off in an arbitrary manner for different zones, depending on the local mechanical integrity (MI) requirements. This is an advantage compared to investment casting or E-LMF, where the control of the microstructure is lost, once epitaxial growth conditions are no longer present and equiaxed grain growth has occurred.

Preferably, the grain size distribution of the powder used in this SLM, SLS or EBM processes is adjusted to the layer thickness d to have to a good flowability, which is required for preparing powder layers with regular and uniform thickness d.

Preferably, the powder grains of the powder used in this process have a spherical shape. The exact grain size distribution of the powder may be obtained by sieving and/or winnowing (air separation). Furthermore, the powder may be obtained by gas or water atomization, plasma-rotating-electrode process, mechanical milling and like powder metallurgical processes.

In other cases, a suspension may be used instead of powder.

When said high temperature material is a Ni-based alloy, a plurality of commercially available alloys may be used like Waspaloy®, Hastelloy® X, IN617®, IN718®, IN625®, Mar-M247®, IN100®, IN738®, 1N792®, Mar-M200®, B1900®, RENE 80®, Alloy 713®, Haynes 230®, Haynes 282®, or other derivatives.

When said high temperature material is a Co-based alloy, a plurality of commercially available alloys may be used like FSX 414®, X-40®, X-45®, MAR-M 509® or MAR-M 302®.

When said high temperature material is a Fe-based alloy, a plurality of commercially available alloys may be used like A 286®, Alloy 800 H®, N 155®, S 590®, Alloy 802®, Incoloy MA 956®, Incoloy MA 957@ or PM 2000®.

Especially, these alloys may contain fine dispersed oxides such as Y2O3, AlO3, Th02, Hf02, Zr02.

In one preferred embodiment the component manufactured with the method according to the invention is a blade or a vane for a turbo machine. The blade/vane comprises an airfoil with a profile. The alignment of the secondary grain orientation is matched with the airfoil profile and the alignment of the secondary grain orientation is gradually and continuously adapted to the shape of the airfoil. This will lead to very good mechanical and fatigue properties.

### Summary:

Mechanical testing and microstructural assessment have shown that specimens built by the SLM process or by other additive manufacturing process have a strong anisotropic behaviour. By scanning and controlling the energy beam in such a way that the secondary crystallographic grain orientation matches with the design intent of the component (alignment with characteristic load conditions), components can be produced, which have optimised mechanical properties in the most heavily loaded areas. For this purpose, the directions with the smallest values of the Young's modulus are aligned with the load conditions of the component.

### LIST OF REFERENCE NUMERALS

- 10: SLM arrangement
- 11: article (3D), component
- 12: powder layer
- 13: laser device
- 14: laser beam
- 15: control unit
- d: layer thickness (powder layer)

## Claims

1. Method for manufacturing a three-dimensional metallic article /component (11) entirely or partly, comprising the steps of
a) successively building up said article / component (11) from a metallic base material (12) by means of an additive manufacturing process by scanning with an energy beam (14), thereby
b) establishing a controlled grain orientation in primary and in secondary direction of the article/component (11),
c) wherein the controlled secondary grain orientation is realized by applying a specific scanning pattern of the energy beam (14), which is aligned to the cross section profile of said article / component (14) or to the local load conditions for said article / component (11).

2. Method according to claim 1, **characterized in that** the control of the secondary grain orientation is achieved by placing the scanner paths alternately parallel and orthogonal in subsequent layers to the direction of the component (11), where a smallest value of the Young's modulus is desired.

3. Method according to claim 1, **characterized in that** in order to achieve a non-pronounced secondary grain orientation the scanner paths are rotated by random angles in subsequent layers.

4. Method according to claim 1, **characterized in that** in order to achieve a non-pronounced secondary grain orientation the scan vectors are parallel within each island of each layer and rotated by 63° in each subsequent layer.

5. Method according to one of claims 1 to 4, **characterized in that** said additive manufacturing process is one of selective laser melting (SLM), selective laser sintering (SLS) or electron beam melting (EBM), that a metallic base material of powder form is used and said method comprises the steps of:
a) generating a three-dimensional model of said article followed by a slicing process to calculate the cross sections;
b) passing said calculated cross sections to a machine control unit (15) afterwards;
c) providing a powder of said base material, which is needed for the process;
d) preparing a powder layer (12) with a regular and uniform thickness on a substrate plate or on a previously processed powder layer;
e) performing melting by scanning with a energy beam (14) an area corresponding to a cross section of said articles according to the three-dimensional model stored in the control unit (15);
f) lowering the upper surface of the previously formed cross section by one layer thickness (d);
g) repeating said steps from c) to f) until reaching the last cross section according to the three-dimensional model; and
h) optionally heat treating said three-dimensional article (11), wherein in steps e) the energy beam (14) is scanned in such a way that
- scan vectors are either perpendicular between each subsequent layer or between each certain areas (islands) of a layer thereby establishing a specific desired secondary crystallographic grain orientation or
- scan vectors have random angles between each subsequent layer or between each certain areas (islands) of a layer thereby not establishing a specific secondary crystallographic grain orientation.

6. Method according to claim 5, **characterized in that** the grain size distribution of said powder is adjusted to the layer thickness (d) of said powder layer (12) in order to establish a good flowability, which is required for preparing powder layers (12) with regular and uniform thickness (d).

7. Method according to claim 5, **characterized in that** the powder grains have a spherical shape and that an exact grain size distribution of the powder is obtained by sieving and/or winnowing (air separation).

8. Method according to claim 5, **characterized in that** said powder is provided by means of a powder metallurgical process, specifically one of gas or water atomization, plasma-rotating-electrode process or mechanical milling.

9. Method according to claim 5, **characterized in that** said additive manufacturing process uses a suspension instead of powder.

10. Method according to one of the claims 1-9, **characterized in that** said metallic base material is one of a high-temperature Ni-based alloy, Co-based alloy, Fe-based alloy or combinations thereof.

11. Method according to claims 10, **characterized in that** said alloy contain finely dispersed oxides, specifically one of Y₂O₃, AlO₃, ThO₂, HfO₂, ZrO₂.

12. Method according to one of claims 1, 2, 5, **characterized in that** the preferential alignment of the secondary grain orientation is applied only in designated sub-volumes.

13. Component (11) manufactured by a method according to one of claims 1-12, **characterized in that** the component (11) is used in the compressor, combustor or turbine section of a gas turbine, preferably as a blade, a vane or a heat shield.

14. Component (11) according to claim 13, wherein the component comprises an airfoil with a profile, **characterized in that** the alignment of the secondary grain orientation is matched with the profile of the airfoil and that it is gradually and continuously adapted to the shape of the airfoil.

15. Component (11) according to claim 13, wherein the alignment of the secondary grain orientation is matched with the local load conditions of the part.
